# EUROPEAN PATENT APPLICATION

(11) **EP 3 892 425 A1**
(43) Date of publication of application: **13.10.2021**
(21) Application number: 21163024.9
(22) Date of filing: 17.03.2021
(51) Int. Cl.: B25J 9/12, H02K 1/27

(54) **ROBOT AND ROBOT SYSTEM**

(30) Priority: 26.03.2020 JP 2020055574
(71) Applicant: Seiko Epson Corporation, Tokyo 160-8801 (JP)
(72) Inventor: OKITA, Taishi, Suwa-shi, Nagano 392-8502 (JP)
(74) Representative: MERH-IP Matias Erny Reichl Hoffmann Patentanwälte PartG mbB

(57) **Abstract**

In a robot including a manipulator including a plurality of joints and a base configured to support the manipulator, a joint closest to the base side among the plurality of joints includes a first motor of an axial gap type, and a joint closest to a distal end side of the manipulator among the plurality of joints includes a distal end motor of a radial gap type.

## Description

The present application is based on, and claims priority from JP Application Serial Number 2020-055574, filed March 26, 2020, the disclosure of which is hereby incorporated by reference herein in its entirety.

### BACKGROUND

### 1. Technical Field

The present disclosure relates to a robot and a robot system.

### 2. Related Art

JP-A-2005-262340 (Patent Literature 1) discloses an industrial robot adopting, in joints of a vertical articulated robot between a rotating body and a lower arm and between the lower arm and an upper arm, a joint structure in which a speed reducer is directly connected to a servo motor. In general, electromagnetic motors classified according to a conversion principle are often used in industrial robots. Further, the electromagnetic motors can be classified into an axial gap type and a radial gap type according to a relation of an arrangement direction of a rotor and a stator with respect to a rotation axis.

When all joints of an articulated robot include axial gap type motors or radial gap type motors, in some case, there remains room for improvement in motion performance such as operating speed.

### SUMMARY

An aspect is directed to a robot including: a manipulator including a plurality of joints; and a base configured to support the manipulator. A joint closest to the base side among the plurality of joints includes a first motor of an axial gap type, and a joint closest to a distal end side of the manipulator among the plurality of joints includes a distal end motor of a radial gap type.

Another aspect is directed to a robot system including: the robot; and a mobile stand configured to move the robot with an axial gap type motor.

### BRIEF DESCRIPTION OF THE DRAWINGS

FIG. 1 is a perspective view for explaining a robot system according to a first embodiment.
FIG. 2 is a block diagram for explaining a basic configuration of a robot system.
FIG. 3 is a table for explaining examples in the first embodiment.
FIG. 4 is a sectional view for explaining an axial gap type motor.
FIG. 5 is a plan view for explaining an armature of the axial gap type motor.
FIG. 6 is a plan view for explaining a field magnet of the axial gap type motor.
FIG. 7 is a sectional view for explaining a magnetization direction viewed from an A-A line in FIG. 6 for each number of magnetic poles per half cycle.
FIG. 8 is a sectional view for explaining a radial gap type motor.
FIG. 9 is a plan view for explaining the radial gap type motor.
FIG. 10 is a plan view for explaining a magnetization direction of a field magnet with I=1.
FIG. 11 is a plan view for explaining a magnetization direction of a field magnet with I=2.
FIG. 12 is a plan view for explaining a magnetization direction of a field magnet with I=3.
FIG. 13 is a plan view for explaining a magnetization direction of a field magnet with I=4.
FIG. 14 is a perspective view for explaining a robot system according to a second embodiment.
FIG. 15 is a side view for explaining a robot system according to a third embodiment.

### DESCRIPTION OF EXEMPLARY EMBODIMENTS

Robot systems according to first to third embodiments of the present disclosure are explained below with reference to the drawings. The embodiments illustrate apparatuses and methods for embodying the technical idea of the present disclosure. The technical idea of the present disclosure does not limit materials, shapes, structures, dispositions, and the like of components to those described below. In the drawings, the same or similar elements are respectively denoted by the same or similar reference numerals and signs and redundant explanation of the elements is omitted. The drawings are schematic and are sometimes different from actual dimensions, relative ratios of the dimensions, dispositions, structures, and the like.

Definitions of directions such as up-down and left-right directions in the following explanation are simply definitions for convenience of explanation and do not limit the technical idea of the present disclosure. For example, it goes without saying that, if an observation target is rotated 90° with a visual line direction as an axis, the up-down direction is converted into and understood as the left-right direction and the left-right direction is converted into and understood as the up-down direction and, if the observation target is rotated 180°, the up-down direction and the left-right direction are respectively reversed and understood. Various changes can be added to the technical idea of the present disclosure within the technical scope described in the appended claims.

### First Embodiment

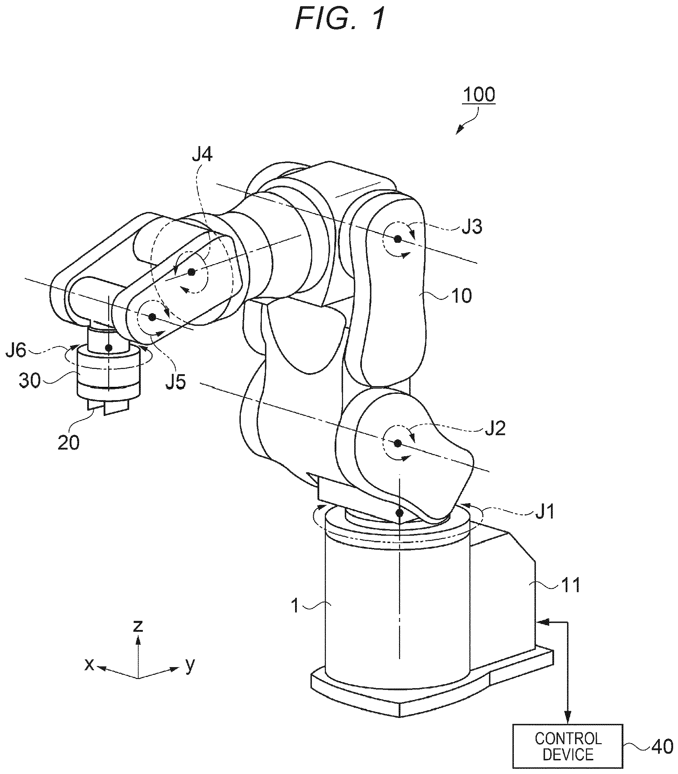

As shown in FIG. 1, a robot system 100 according to a first embodiment includes, for example, a robot 1 and a control device 40. The robot 1 includes, for example, a manipulator 10 including a plurality of joints J1 to J6, a base 11 that supports the manipulator 10, an end effector 20, and a force sensor 30. As the robot 1, for example, a general-purpose robot capable of performing various kinds of work according to programs generated by a not-shown teaching device is adopted.

The manipulator 10 is, for example, a robotic arm including seven links coupled to one another by the six joints J1 to J6 to thereby move at six degrees of freedom. In an example shown in FIG. 1, the manipulator 10 is a six-axis arm including the six joints J1 to J6, which are respectively rotary joints. The manipulator 10 may include any joint structure if the joint structure includes a plurality of joints. For example, the number of joints is three or more. The base 11 supports, in the joint J1, a first link of the manipulator 10, that is, one link closest to the base 11 side.

The end effector 20 is a tool such as a screwdriver, a gripper, or a grinder. The end effector 20 performs various kinds of work such as screwing, gripping, polishing. The end effector 20 is attached to a mechanical interface at the distal end of the manipulator 10 via the force sensor 30. The manipulator 10 is controlled to be driven by the control device 40 to thereby determine a position and a posture, that is, a pose of the end effector 20.

The force sensor 30 detects an external force acting on a tool center point (TCP), which is a reference of the position of the end effector 20, for example, via the end effector 20. Specifically, the force sensor 30 outputs a signal indicating the external force to the control device 40, whereby force on three detection axes and torques around the three detection axes acting on the TCP are detected as the external force in the control device 40. The three detection axes form, for example, a world coordinate system defined by an x axis, a y axis, and a z axis orthogonal to one another.

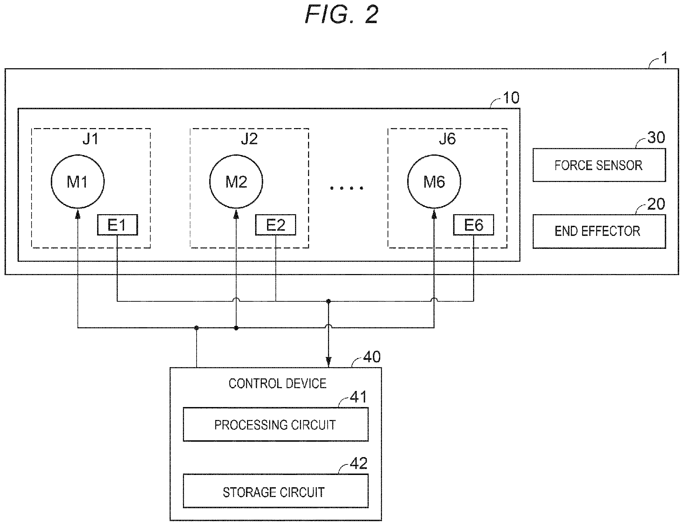

As shown in FIG. 2, the plurality of joints J1 to J6 include a plurality of motors M1 to M6 and a plurality of encoders E1 to E6. The motors M1 to M6 are driven by control by the control device 40 and respectively drive the joints J1 to J6. The encoders E1 to E6 detect rotation angles of the motors M1 to M6 and output the rotation angles to the control device 40.

For example, a first joint J1 disposed closest to the base 11 among the joints J1 to J6 includes a first motor M1 and a first encoder E1 that detects a rotation angle of the first motor M1. A rotation axis of the first joint J1 extends along the z axis in the world coordinate system. A second joint J2 second from the base 11 among the joints J1 to J6 includes a second motor M2 and a second encoder E2 that detects a rotation angle of the second motor M2. A rotation axis of the second joint J2 extends along an x-y plane in the world coordinate system. Similarly, a distal end joint J6 disposed closest to the distal end side of the manipulator 10 among the joints J1 to J6 includes a distal end motor M6 and a distal end encoder E6 that detects a rotation angle of the distal end motor M6.

The control device 40 includes a processing circuit 41 and a storage circuit 42 configuring a computer system. The processing circuit 41 executes, for example, a control program stored in the storage circuit 42 to thereby realize functions described in the embodiment. As a circuit configuring at least a part of the processing circuit 41, various logical operation circuits such as a central processing unit (CPU), a digital signal processor (DSP), a programmable logic device (PLD), and an application specific integrated circuit (ASIC) can be adopted.

The storage circuit 42 is a computer-readable storage medium that stores a control program indicating a series of processing necessary for the operation of the robot system 100 and various data. As the storage circuit 42, for example, a semiconductor memory can be adopted. Each of the processing circuit 41 and the storage circuit 42 may be configured from integrated hardware or may be configured from a separate plurality of kinds of hardware. A part or all of components of the control device 40 may be disposed on the inner side of a housing of the robot 1.

The control device 40 executes, according to the control program, position control for driving the motors M1 to M6 to move the TCP to a pose, which is a target value. The control device 40 detects the pose of the TCP in the world coordinate system based on rotation angles acquired from the encoders E1 to E6. The control device 40 executes, according to the control program, based on information indicating an external force input from the force sensor 30, force control for correcting the target value of the TCP such that the external force acting on the TCP coincides with a target force. The control device 40 can control, according to the control program, driving of a motor included in the end effector 20.

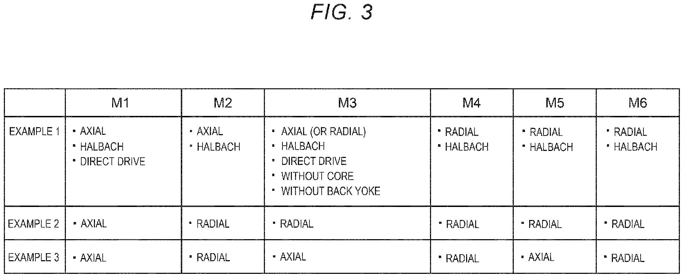

As shown in FIG. 3, in an example 1, a type of the first motor M1, the second motor M2, and a third motor M3 is an axial gap type. A type of a fourth motor M4, a fifth motor M5, and the distal end motor M6 is a radial gap type. In the plurality of motors M1 to M6 from the first motor M1 to the distal end motor M6, when viewed in order from the base 11 side to the distal end side, the number of change points where the axial gap type changes to the radial gap type is one. That is, in the motors M1 to M6, the number of pairs of motors of the axial gap type and the radial gap type adjacent to each other like a pair of the third motor M3 and the fourth motor M4 is one. In other words, all of the axial gap type motors included in the manipulator 10 are provided further on the base 11 side of the manipulator 10 than the radial gap type motors.

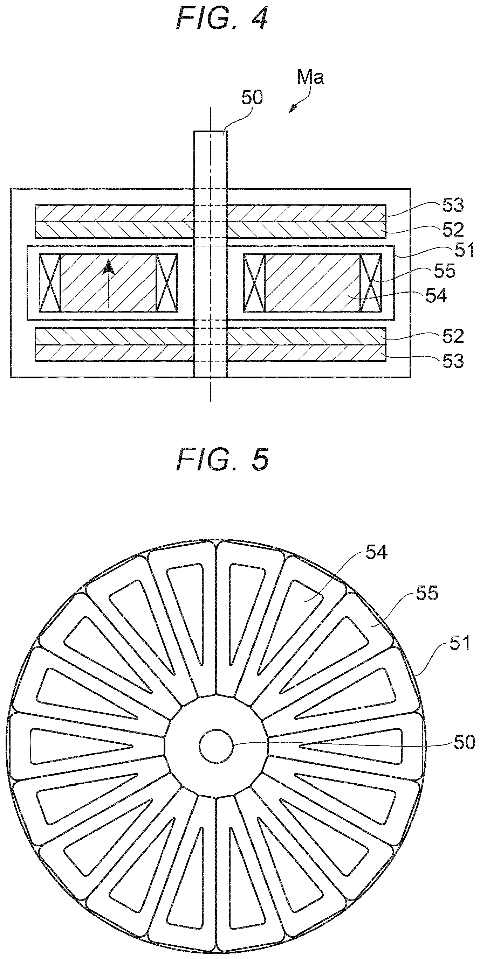

As shown in FIG. 4, an axial gap type motor Ma includes a shaft 50, an armature 51, field magnets 52 opposed to the armature 51, and back yokes 53 disposed on sides of the field magnets 52 opposite to the armature 51. Gaps between the armature 51 and the field magnets 52 are provided in a direction along the shaft 50. In an example shown in FIG. 4, a pair of field magnets 52 are disposed to sandwich the armature 51. However, the number of the field magnets 52 may be one. For example, the motor Ma includes the armature 51 as a rotor and includes the field magnet 52 as a stator. The motor Ma may include the armature 51 as the stator and include the field magnet 52 as the rotor. The shaft 50 can be equivalent to a rotating shaft of the rotor.

As shown in FIG. 5, the armature 51 generally has a disk shape. The armature 51 includes a plurality of cores 54 and a plurality of coils 55. Each of the cores 54 generally has a triangular prism shape having height along the shaft 50. The core 54 is made of, for example, an amorphous magnetic body and configured from a plurality of plates stacked in the radial direction of the shaft 50. The plurality of cores 54 are supported by, for example, bobbins, whereby a positional relation among the plurality of cores 54 is fixed. Each of the coils 55 is made of a winding wire wound on the side surface of the core 54. The number of pairs of the cores 54 and the coils 55 is, for example, eighteen. The plurality of cores 54 and the plurality of coils 55 are arrayed at equal intervals along the circumference of a circle centering on the shaft 50 to have eighteen times of rotational symmetry concerning the shaft 50.

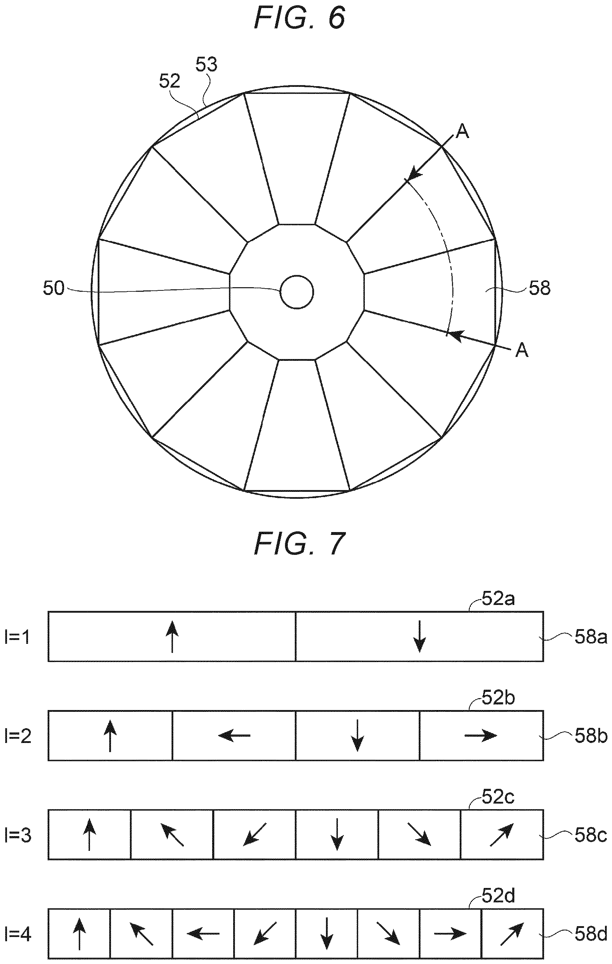

As shown in FIG. 6, the field magnet 52 generally has a disk shape. The field magnet 52 includes a plurality of magnetic poles 58 arrayed along the circumference of the circle centering on the shaft 50. The plurality of magnetic poles 58 have magnetization directions cyclically different in an array direction. The plurality of magnetic poles 58 include, per cycle, a pair of main magnetic poles including a first main magnetic pole magnetized in a first direction along the shaft 50 and a second main magnetic pole magnetized in a second direction opposite to the first direction.

As shown in FIG. 7, when the number of the magnetic poles 58 per half cycle in the array direction is represented as I, a field magnet 52a with I=1 includes two magnetic poles 58a, that is, the pair of main magnetic poles including the first main magnetic pole and the second main magnetic pole per cycle. A field magnet 52b with I=2 includes four magnetic poles 58b, that is, a pair of main magnetic poles and a pair of sub-magnetic poles per cycle. The magnetic pole 58b has a magnetization direction different from a magnetization direction of an adjacent magnetic pole 58b by 90° when viewed from the radial direction of the shaft 50. Each of the plurality of magnetic poles 58b has a magnetization direction that changes to rotate 90° at a time with the radial direction of the shaft 50 as an axis in order in the array direction.

A field magnet 52c with I=3 includes six magnetic poles 58c, that is, a pair of main magnetic poles and four sub-magnetic poles per cycle. The magnetic pole 58c has a magnetization direction different from a magnetization direction of an adjacent magnetic pole 58c by 60° when viewed from the radial direction of the shaft 50. Each of the plurality of magnetic poles 58c has a magnetization direction that changes to rotate 60° at a time with the radial direction of the shaft 50 as an axis in order in the array direction. A field magnet 52d with I=4 includes eight magnetic poles 58d, that is, a pair of main magnetic poles and six sub-magnetic poles per cycle. The magnetic pole 58d has a magnetization direction different from an adjacent magnetic pole 58d by 45° when viewed from the radial direction of the shaft 50. Each of the plurality of magnetic poles 58d has a magnetization direction that changes to rotate 45° at a time with the radial direction of the shaft 50 as an axis in order in the array direction.

The field magnet 52 with I≥2 such as field magnets 52b, 52c, and 52d forms a Halbach array. In the motor Ma having the Halbach array, the armature 51 is disposed on a strong magnetic field side of the Halbach array. On the other hand, the back yoke 53 is disposed on a weak magnetic field side of the Halbach array. When the field magnet 52 forms the Halbach array, the motor Ma can increase magnetic flux density on the surface on the armature 51 side. Therefore, a torque constant can be improved. In particular, when I is 3 or 4, a change in the magnetic flux density in the array direction can be smoothed. The torque constant can be further improved.

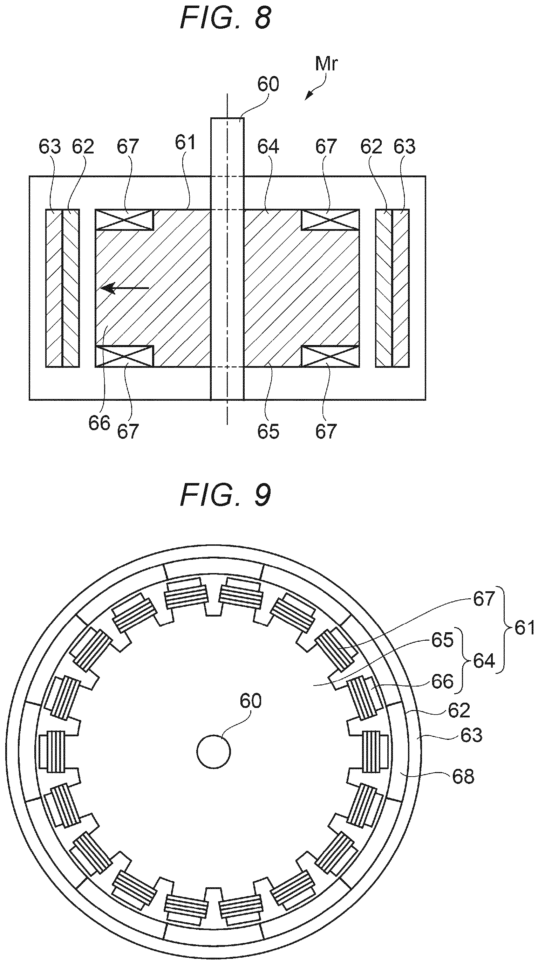

As shown in FIG. 8, a radial gap type motor Mr includes a shaft 60, an armature 61, field magnets 62 opposed to the armature 61, and back yokes 63 disposed on sides of the field magnets 62 opposite to the armature 61. Gaps between the armature 61 and the field magnets 62 are provided in the radial direction of the shaft 60. In an example shown in FIG. 8, the armature 61 generally having a columnar shape is disposed on the inner side of the field magnet 62 having a cylindrical shape. However, the motor Mr may have topology in which the armature 61 is disposed on the outer side of the field magnet 62. For example, the motor Mr includes the armature 61 as a rotor and includes the field magnet 62 as a stator. The motor Mr may include the armature 61 as the stator and include the field magnet 62 as the rotor. The shaft 60 can be equivalent to a rotating shaft of the rotor.

As shown in FIG. 9, the armature 61 includes a core 64 and a plurality of coils 67. The core 64 includes a cylindrical yoke section 65 and a plurality of rib sections 66 projecting to the outer side from the side surface of the yoke section 65. The core 64 is made of, for example, an amorphous magnetic body. Each of the plurality of rib sections 66 extends along the shaft 60. Each of the plurality of rib sections 66 is configured from, for example, a plurality of plates stacked in a direction along the shaft 60. Each of the coils 67 is made of a winding wire wound on the rib section 66. The number of pairs of the rib sections 66 and the coils 67 is, for example, eighteen. The plurality of rib sections 66 and the plurality of coils 67 are disposed at equal intervals along the circumference of a circle centering on the shaft 60 to have eighteen times of rotational symmetry concerning the shaft 60.

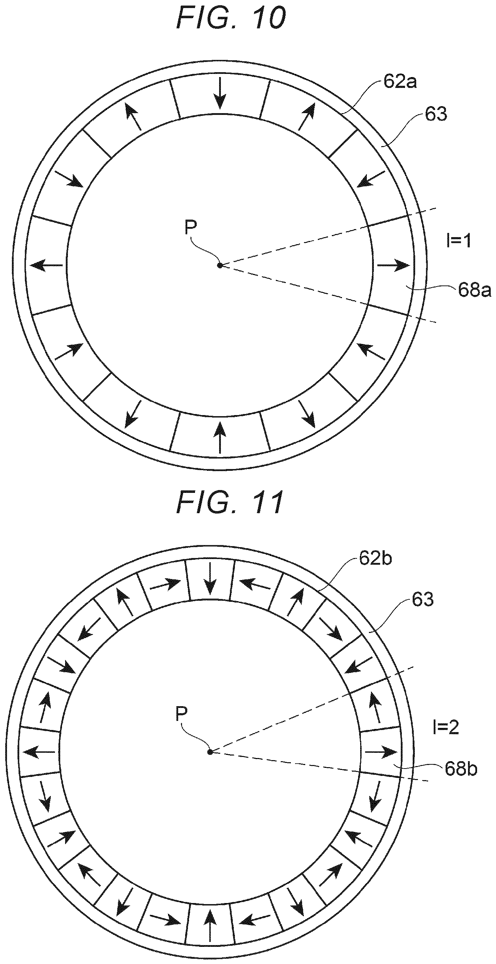

The field magnet 62 includes a plurality of magnetic poles 68 arrayed along the circumference of the circle centering on the shaft 60. The plurality of magnetic poles 68 have magnetization directions cyclically different in an array direction. The plurality of magnetic poles 68 include, per cycle, a pair of main magnetic poles, that is, a first main magnetic pole magnetized in the radial direction of the shaft 60 and a second main magnetic pole magnetized in a direction opposite to the magnetization direction of the first main magnetic pole. When the number of the magnetic poles 68 per half cycle in the array direction is represented as I, as shown in FIG. 10, a field magnet 62a with I=1 includes two magnetic poles 68a, that is, a pair of main magnet poles including the first main magnetic pole and the second main magnetic pole per cycle.

As shown in FIG. 11, a field magnet 62b with I=2 includes four magnetic poles 68b, that is, a pair of main magnetic poles and a pair of sub-magnetic poles per cycle. When the center axis of the shaft 60 is represented as an axis P, the magnetic pole 68b has a magnetization direction different from a magnetization direction of an adjacent magnetic pole 68b by 90° based on the axis P when viewed from a direction along the axis P. That is, each of the plurality of magnetic poles 68b has a magnetization direction that changes to rotate 90° at a time in the array direction in order based on the axis P.

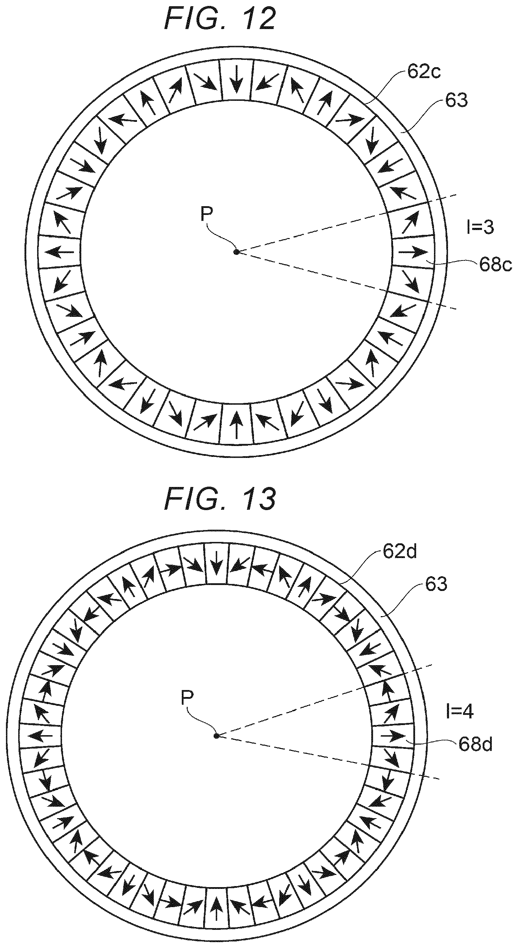

As shown in FIG. 12, a field magnet 62c with I=3 includes six magnetic poles 68c, that is, a pair of main magnetic poles and four sub-magnetic poles per cycle. The magnetic pole 68c has a magnetization direction different from a magnetization direction of an adjacent magnetic pole 68c by 60° based on the axis P when viewed from the direction along the axis P. That is, each of the plurality of magnetic poles 68c has a magnetization direction that changes to rotate 60° at a time in the array direction in order based on the axis P.

As shown in FIG. 13, a field magnet 62d with I=4 includes eight magnetic poles 68d, that is, a pair of main magnetic poles and six sub-magnetic poles per cycle. The magnetic pole 68d has a magnetization direction different from a magnetization direction of an adjacent magnetic pole 68d by 45° based on the axis P when viewed from the direction along the axis P. That is, each of the plurality of magnetic poles 68d has a magnetization direction that changes to rotate 45° at a time in the array direction in order based on the axis P.

The field magnet 62 with I≥2 such as field magnets 62b, 62c, and 62d forms a Halbach array. In the motor Mr having the Halbach array, the armature 61 is disposed on a strong magnetic field side of the Halbach array. On the other hand, the back yoke 63 is disposed on a weak magnetic field side of the Halbach array. When the field magnet 62 forms the Halbach array, the motor Mr can increase magnetic flux density on the surface on the armature 61 side. Therefore, a torque constant can be improved. In particular, when I is 3 or 4, a change in the magnetic flux density in the array direction can be smoothed. The torque constant can be further improved.

In the example 1 shown in FIG. 3, each of the first motor M1, the second motor M2, and third motor M3 is equivalent to the axial gap type motor Ma. The third motor M3 may be the radial gap type motor Mr. When increasing torque, the axial gap type motor Ma can prevent an increase in a dimension in a rotation axis direction compared with the radial gap type. Accordingly, when the first motor M1 relatively requiring torque because the first motor M1 is disposed closest to the base 11 side in the manipulator 10 is the axial gap type, it is possible to prevent the height of a first link of the base 11 and the manipulator 10 from increasing.

Each of the fourth motor M4, the fifth motor M5, and the distal end motor M6 is equivalent to the radial gap type motor Mr. When increasing torque, the radial gap type motor Mr can prevent an increase in a dimension in the radial direction of a rotation axis compared with the axial gap type. Accordingly, when the distal end motor M6 relatively not requiring torque because the distal end motor M6 is disposed closest to the distal end side of the manipulator 10 is the radial gap type, it is possible to prevent a dimension of a link coupled to the distal end joint J6 from increasing in the radial direction of the distal end motor M6.

A field magnet of each of the first motor M1 to the distal end motor M6 forms a Halbach array. That is, the number of magnetic poles I per half cycle in the Halbach array is two or more. Consequently, since magnetic flux density on a strong magnetic field side of the Halbach array can be increased, a torque constant can be improved. In particular, when I is 3 or 4, a change in magnetic flux density in the array direction can be smoothed. The torque constant can be further improved.

The first motor M1 drives the first joint J1 with direct drive. The third motor M3 drives the third joint J3 with the direct drive. Alternatively, each of all of the first motor M1, the second motor M2, and the third motor M3 of the axial gap type may drive any one of the joints J1 to J3 corresponding thereto with the direct drive. In this way, at least any one of the motors M1 to M6 may drive any one of the joints J1 to J6 corresponding thereto with the direct drive. Consequently, a speed reducer can be omitted. Low-speed torque can be improved. A reduction in weight and a reduction in manufacturing cost can be realized.

When the third motor M3 is the axial gap type motor Ma, the third motor M3 may include the armature 51 having a coreless structure not including the core 54. Similarly, when the third motor M3 is the radial gap type motor Mr, the third motor M3 may include the armature 61 having the coreless structure not including the core 64. Similarly, the third motor M3 may not include the back yoke 53 or the back yoke 63. Consequently, a reduction in the weight of the manipulator 10 can be realized.

In particular, the heights of the first joint J1 and the second joint J2 based on the base 11 are fixed. The heights of the joints J3 to J6 further on the distal end side than the second joint J2 based on the base 11 can change. Accordingly, at least any one of the motors M3 to M6 further on the distal end side than the second motor M2 having the coreless structure can reduce a loss and heat generation due to an eddy current and further contribute to improvement of the motion performance of the manipulator 10 through a reduction in weight. When the motors M1 to M6 include field magnets forming a Halbach array, the back yoke 53 or the back yoke 63 on the weak magnetic field side can be omitted. Consequently, the motion performance of the manipulator 10 can be further improved.

In an example 2, only the type of the first motor M1 is the axial gap type. The type of the other motors M2 to M6 is the radial gap type. The other components not explained in the example 2 may be the same as or may be different from the components in the example 1.

In an example 3, the type of the first motor M1, the third motor M3, and the fifth motor M5 is the axial gap type and the type of the second motor M2, the fourth motor M4, and the distal end motor M6 is the radial gap type. In this way, in the motors M1 to M6, the number of pairs of an axial gap type motor and a radial gap type motor adjacent to each other may be two or more. The other components, action, and effects not explained in the examples 2 and 3 are the same as those in the example 1.

In the robot system 100 according to the first embodiment, the type of the first motor M1 of the first joint J1 is the axial gap type and the type of the distal end motor M6 of the distal end joint J6 is the radial gap type. Since the first motor M1 relatively requiring torque is the axial gap type, it is possible to prevent the height of the first link of the base 11 and the manipulator 10 from increasing. Since the distal end motor M6 relatively not requiring torque is the radial gap type, it is possible to prevent the dimension of the link coupled to the distal end joint J6 from increasing in the radial direction of the distal end motor M6. Consequently, a weight balance and volume efficiency of the manipulator 10 are improved. Speed, motion performance such as speed, acceleration, jerk, and a movement range of the manipulator 10 can be improved.

### Second Embodiment

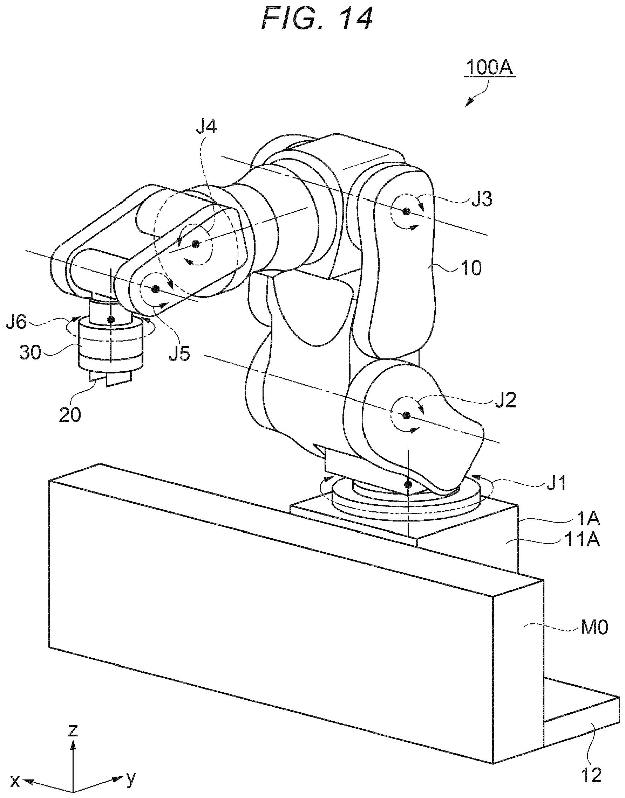

As shown in FIG. 14, a robot system 100A according to a second embodiment includes, for example, a robot 1A, a mobile stand 12 that moves the robot 1A, and a not-shown control device. The other components, action, and effects not explained in the second embodiment are the same as those in the first embodiment. Therefore, redundant explanation of the components, the action, and the effects is omitted.

The robot 1A includes the manipulator 10 including a plurality of joints J1 to J6, a base 11A that supports the manipulator 10, the end effector 20, and the force sensor 30. The mobile stand 12 moves the base 11A along the x axis in the world coordinate system with an axial gap type motor M0 to thereby move the robot 1A. The mobile stand 12 may move the robot 1A along a curve.

### Third Embodiment

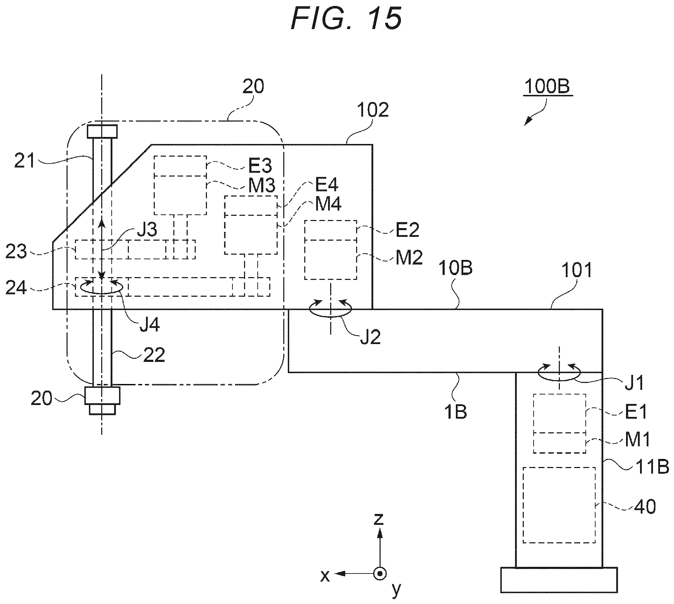

As shown in FIG. 15, a robot system 100B according to a third embodiment is different from the first and second embodiments in that, for example, the robot system 100B includes a robot 1B, which is a SCARA robot. The other components, action, and effects not explained in the third embodiment are the same as those in the first and second embodiments. Therefore, redundant explanation of the components, the action, and the effects is omitted.

The robot 1B includes a manipulator 10B including a plurality of joints J1 to J4, a base 11B that supports the manipulator 10B, and the end effector 20. Like the robot 1 according to the first embodiment, the robot 1B can include a not-shown force sensor that detects an external force acting on the end effector 20. Further, the robot 1B includes the control device 40 housed on the inner side of the base 11B.

The manipulator 10B includes a first link 101 and a second link 102. The first link 101 is coupled to the base 11B via the first joint J1 disposed closest to the base 11B side. The first joint J1 is driven by the first motor M1. The second joint J2 from the base 11B among the joints J1 to J4 is driven by the second motor M2. Rotation axes of the first joint J1 and the second joint J2 extend along the z axis in the world coordinate system. Rotation angles of the first motor M1 and the second motor M2 are detected by the first encoder E1 and the second encoder E2.

The manipulator 10B includes a ball screw spline 21 provided in the second link 102. The ball screw spline 21 includes a screw spline shaft 22, a nut 23, and an outer cylinder 24. The screw spline shaft 22 includes a spiral screw groove and a spline groove extending along the axial direction of the screw spline shaft 22. The nut 23 and the outer cylinder 24 respectively include through-holes into which the screw spline shaft 22 is inserted. The center position of the nut 23 and the outer cylinder 24 is relatively fixed to a frame of the second link 102.

The third joint J3 and the fourth joint J4 disposed closest to the distal end side among the joints J1 to J4 are respectively driven by the third motor M3 and the fourth motor M4. Rotation angles of the third motor M3 and the fourth motor M4 are detected by the third encoder E3 and the fourth encoder E4.

The third motor M3 rotates the nut 23 via a speed reducer. The screw spline shaft 22 moves straight along the z axis according to the rotation of the nut 23. In this way, the screw spline shaft 22 and the nut 23 configuring the ball screw cause the end effector 20 to move straight with respect to the second link 102. When the outer cylinder 24 rotates according to the rotation of the fourth motor M4, the screw spline shaft 22 rotates together with the outer cylinder 24. The screw spline shaft 22 and the outer cylinder 24 configuring the ball spline cause the end effector 20 to rotate with respect to the second link 102.

For example, a type of the first motor M1 is the axial gap type. A type of at least any one distal end motor of the third motor M3 and the fourth motor M4 is the radial gap type. A type of the second motor M2 is the axial gap type or the radial gap type. Consequently, when viewed in order from the base 11B side to the distal end side, the number of change points where the axial gap type changes to the radial gap type is one.

The embodiments are explained above. However, the present disclosure is not limited to the disclosures of the embodiments. The components of the sections may be replaced with any components having the same functions. Any components in the embodiments may be omitted or added within the technical scope of the present disclosure. In this way, various alternative embodiments will be made clear for those skilled in the art from these disclosures.

For example, the number of manipulators and the number of end effectors included in a robot such as the robots 1, 1A, and 1B and a degree of freedom of the manipulators can be optionally changed. Further, the robots in the robot systems 100, 100A, and 100B can be a Cartesian coordinate robot, a horizontal articulated robot, a vertical articulated robot, a double-arm robot, and the like.

Besides, it goes without saying that the present disclosure includes various embodiments not explained above such as a configuration in which the components explained above are applied to one another. The technical scope of the present disclosure can be decided only by reasonable matters to define the inventions according to the appended claims from the above explanation.

## Claims

1. A robot comprising:
a manipulator including a plurality of joints; and
a base configured to support the manipulator, wherein
a joint closest to the base side among the plurality of joints includes a first motor of an axial gap type, and
a joint closest to a distal end side of the manipulator among the plurality of joints includes a distal end motor of a radial gap type.

2. The robot according to claim 1, wherein
a number of the plurality of joints is three or more, and
a second joint from the base among the plurality of joints of the manipulator includes a second motor of the axial gap type.

3. The robot according to claim 1, wherein all motors of the axial gap type included in the manipulator are provided further on the base side of the manipulator than motors of the radial gap type.

4. The robot according to claim 1, wherein a field magnet of the first motor forms a Halbach array.

5. The robot according to claim 4, wherein a number of magnetic poles per half cycle of the Halbach array is three or four.

6. The robot according to claim 1, wherein the first motor is driven by direct drive.

7. A robot system comprising:
the robot according to claim 1; and
a mobile stand configured to move the robot with an axial gap type motor.
